# EUROPÄISCHE PATENTSCHRIFT

(11) **EP 0 738 189 B1**
(45) Veröffentlichungstag und Bekanntmachung des Hinweises auf die Patenterteilung: **09.06.1999**
(21) Anmeldenummer: 95904531.1
(22) Anmeldetag: 23.12.1994
(51) Int. Cl.: B09C 1/08, C02F 11/08, A62D 3/00

(54) **VERFAHREN ZUR OXIDATIVEN REINIGUNG VON KONTAMINIERTEM SCHLAMM ODER AUFGESCHLÄMMTER ERDE**
OXIDATIVE CLEANING PROCESS OF CONTAMINATED SLURRIES OR SLURRIED EARTH
PROCEDE D'EPURATION PAR OXYDATION DE BOUES OU DE TERRES EN SUSPENSION CONTAMINEES

(30) Priorität: 07.01.1994 DE 4400242
(43) Veröffentlichungstag der Anmeldung: 23.10.1996
(73) Patentinhaber: BAYER AG, 51368 Leverkusen (DE)
(72) Erfinder: HOLZER, Klaus, 51381 Leverkusen (DE); HORAK, Otto, 51375 Leverkusen (DE); MELIN, Thomas, 51061 Köln (DE)
(86) Internationale Anmeldenummer: EP9404300
(87) Internationale Veröffentlichungsnummer: WO9518687

(56) Entgegenhaltungen:
- WO-A-88/06144
- DE-A- 2 555 536
- DE-A- 3 316 265
- US-A- 5 051 191

## Beschreibung

Die Erfindung betrifft ein Verfahren zur Reinigung von kontaminiertem Schlamm oder aufgeschlämmter Erde. Eines der am häufigsten und am erfolgreichsten angewandten Verfahren zur Reinigung kontaminierter Erdböden ist die Bodenwäsche. Ein derartiges Verfahren wird z. B. in der Zeitschrift Altlasten 1/92, S.32 bis 34 von E. Hilmer und E. Schramm beschrieben. Dabei wird das zu reinigende Material, in der Regel Erde, die mit Sand oder Kies vermischt ist, einer mehrstufigen intensiven Naßwäsche mit Hochdruckwasserstrahlen unterzogen. Das Abwasser einer solchen Bodenwäsche enthält unabhängig vom Waschverfahren selbst neben den im Wasser gelösten Bodenverunreinigungen auch den sogenannten 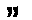 Feinschluff". Darunter ist der feinkörnige Bodenanteil mit einer Korngröße < 0,5mm zu verstehen. An diesem Feinanteil hängen aber erfahrungsgemäß die meisten organischen Bodenverunreinigungen (Kohlenwasserstoffe, polyzyklische, aromatische Kohlenwasserstoffe (PAK) oder chlorierte Kohlenwasserstoffe (CKW) etc.), die durch die Bodenwäsche nicht zerstört werden.

Ein schwerwiegendes Problem stellt auch die Dekontaminierung bzw. Reinigung von kontaminierten Baggerschlämmen dar. Insbesondere Hafenstädte stehen vor dem Problem der Entsorgung von Baggerschlämmen, die häufig mit organischen Schadstoffen, aber auch mit Schwermetallen, verunreinigt sind. Bereits auf dem Baggerschiff wird mit Hilfe von Hydrozyklonen eine Separierung des Feststoffs nach Korngrößenanteilen durchgeführt. Auch hier befinden sich die meisten Verunreinigungen im Feinanteil mit einer Korngröße <0,5mm.

Aus der deutschen Offenlegungsschrift DE-A-25 55 536 ist ein Verfahren zum Abbau von organischen Verbindungen in Abwässern durch Naßoxidation bekannt, bei dem Abwasser bei einem Redoxpotential von 300 bis 600 mV, einer Temperatur von 80°C bis 250°C und einen Druck oberhalb von 3 bar mit sauerstoffhaltigem Gas oxidiert wird. Die Aufarbeitung des Abwassers gelingt insbesondere mit einer Erniedrigung des pH Wertes durch Zugabe von Mineralsäuren und mit Hilfe des Redoxsystemes Fe²⁺/ Fe³⁺. Die Möglichkeit einer Anwendung des Verfahrens auf Schlamm oder kontaminierte Erde wird in der Schritt nicht erwähnt.

Aus der deutschen Offenlegungsschrift DE-A-33 16 265 ist ebenfalls ein Abwasserbehandlungsverfahren bekannt, bei dem die Naßoxydation mittels sauerstoffhaltiger Gase in Gegenwart eines Redoxsystemes durch Zugabe von Chinonen als Cokatalysatoren unterstützt wird. Dabei können die Chinone auch in situ durch alkalische Vorbehandlung des Abwassers erzeugt werden. Obwohl die Abwasserbehandlungsverfahren mittels Naßoxidation schon über einen längeren Zeitraum in Gebrauch sind, sind keine Überlegungen bekannt geworden, die auf dem Gebiet der Abwasserbehandlung bekannten Verfahren, auf die Dekontanimierung von Schlamm oder Erde zu übertragen.

Der Erfindung liegt die Aufgabe zugrunde, ein Verfahren zur Beseitigung der Schadstoffe in kontaminierten Böden oder Schlämmen zu entwickeln. Insbesondere sollen mit Mineralöl, PAK, PCB und Pflanzenschutzmittelrückständen verunreinigte Böden oder Schlämme dekontaminiert werden.

Diese Aufgabe wird erfindungsgemäß dadurch gelöst, daß der kontaminierte Schlamm oder die von dem zu dekontaminierenden Boden stammende aufgeschlämmte Erde mit einer Konzentration von 3 % bis 25 % Trockensubstanz, vorzugsweise 10 % bis 15 % Trockensubstanz, bei einer Temperatur von 80°C bis 330°C, vorzugsweise 120°C bis 220°C, und bei einem Druck von 1 bar bis 200 bar, vorzugsweise 3 bis 50 bar und bei pH-Werten < 7, durch Zugabe von reinem Sauerstoff oder eines sauerstoffhaltigen Gases naßoxidiert wird, wobei dem Schlamm oder der aufgeschlämmten Erde zur Beschleunigung der Oxidationsreaktion Eisenionen allein oder in Kombination mit Chinonen oder chinonbildenden Substanzen zugesetzt werden.

Ferner wurde gefunden, daß zur Beschleunigung der Reaktion anstelle der Chinone auch Überschußschlamm oder Faulschlamm aus einer biologischen Kläranlage als Cokatalysator zugesetzt werden kann.

Falls der zu behandelnde Boden oder Schlamm grobkörnige Anteile aufweist, wird zweckmäßig eine Naßmahlung auf Korngrößen < 500 µm, vorzugsweise < 100 µm durchgeführt.

Gemäß einer Weiterentwicklung des erfindungsgemäßen Verfahrens werden die bei einer sauren Oxidation gegebenenfalls in Lösung gegangenen Schwermetalle nach Abtrennung der oxidativ gereinigten Feststoffe durch Alkalizugabe als Hydroxide ausgefällt und anschließend abfiltriert.

Mit der Erfindung werden folgende Vorteile erzielt. Die Oxidationsreaktion kann bei relativ milden Bedingungen bei Temperaturen < 220°C und Drücken < 50 bar durchgeführt werden. Dadurch ist die Materialbeanspruchung geringer, Kosten werden gesenkt und die Sicherheit des Verfahrens wird erhöht.

Im folgenden wird die Erfindung anhand eines Fließschemas näher erläutert und durch Ausführungsbeispiele verdeutlicht.

Bei der großtechnischen Anwendung des erfindungsgemäßen Verfahrens zur oxidativen Reinigung von kontaminierten Böden oder Schlämmen wird der aufgeschlämmte Boden oder der Schlamm mit einem Feststoffgehalt von etwa 10 % bis 15 % Trockensubstanz zunächst durch eine Naßmahlvorrichtung 1 auf Korngrößen unter 0,2 mm homogenisiert. Danach ist der Schlamm auch bei einer Trockensubstanz von 15 % noch problemlos pumpfähig. Nach Ansäuerung der Suspension mit H₂SO₄ werden Eisenionen vorzugsweise in Form von FeSO₄ sowie Chinone oder chinoide Substanzen als Katalysatoren zugefügt. Anstelle der teuren Chinone kann aber auch Klärschlamm aus biologischen Kläranlagen, z.B. Überschußschlamm oder Faulturmschlamm als Co-Katalysator eingesetzt werden. Diese Mischung wird über eine Pumpe 2 auf einen Prozeßdruck von maximal 20 bar gebracht, in einem Gegenstrom-Wärmetauscher (3) erhitzt und anschließend einem Oxidationsreaktor 4 zugeführt. Als Reaktor dient eine Blasensäulenkolonne, in die reiner Sauerstoff über Injektoren am Kolonnenboden feinblasig eingedüst wird. Die Oxidationsreaktion läuft im Reaktor in einem Temperaturbereich von 160°C bis 200°C bei einer Verweilzeit von 2 bis 3 Stunden ab. Dabei werden die organischen Schlammbestandteile sowie die organischen Schadstoffe im Schlamm zu CO₂ und H₂O oxidiert.

Die Oxidation verläuft exotherm; d.h. während der Reaktion wird Wärme frei. Es genügt bereits ein Abbau von 3 bis 4 g TOC/l, um den Prozeß autotherm ablaufen zu lassen. Ist im Schlamm ausreichend Kohlenstoff vorhanden, so muß nach dem erstmaligen Aufheizen der Anlage keine weitere Wärmeenergie mehr zugeführt werden. Der behandelte Schlamm fließt vom Kopf der Kolonne (Oxidationsreaktor 4) zum Gegenstromwärmetauscher 3 und wird dort abgekühlt. Die abgekühlte Suspension wird anschließend im Zyklon 5 entgast und entspannt. Dabei entsteht eine geringe Menge Abgas, das neben CO₂ auch CO enthält und zwecks Nachbehandlung einer Verbrennungsanlage zugeführt wird.

Der aufoxidierte und entgaste Schlamm wird in einer Filterpresse 6 oder einem Dekanter entwässert. Da dieser Schlamm nun überwiegend aus anorganischen Anteilen besteht, läßt er sich gut entwässern (bis zu einer Trockensubstanz > 50 %) und kann anschließend deponiert werden.

Bei der Oxidation im Sauren können verschiedene anorganische Stoffe, insbesondere Schwermetalle, in Lösung gehen, wenn solche Schadstoffe in dem zu behandelnden Boden oder Schlamm vorhanden sind. Wird das von der Filterpresse 6 kommende, von Feststoffen befreite Abwasser durch Zugabe von Alkali, z.B. NaOH alkalisiert, so werden solche gelösten Schadstoffe in Hydroxide umgewandelt. Diese lassen sich anschließend in einem Sedimentationsgefäß 7 ausfällen und abtrennen. In einer nachfolgenden Filterpresse 8 können dann die Metall-Hydroxide entwässert und getrennt entsorgt werden. Das von anorganischen Stoffen bzw. Schwermetallen befreite Abwasser enthält dann allenfalls nur noch biologisch gut abbaubare organische Reststoffe und kann über die Abwasserleitung 9 zur Endreinigung in eine konventionelle biologische Kläranlage eingeleitet werden.

### Beispiel 1

Bei einer konventionellen Bodenwäsche entstand ein Schlamm mit ca. 5 bis 7 % Feststoff mit einer Korngröße < 1 mm. Dieser Schlamm war mit polyzyklischen, aromatischen Kohlenwasserstoffen (PAK) in einer Gesamtkonzentration von 917 mg/kg Feststoff verunreinigt. Die Konzentration der Einzelkomponenten ist aus Spalte 2 der Tabelle 1 ersichtlich.

Eine 3-stündige Behandlung bei 190°C und pH = 2 nach dem zuvor beschriebenen Verfahren ergab eine Reduktion der PAK's auf < 9 mg/kg. Dies bedeutet, daß mehr als 99 % oxidativ abgebaut wurden. Aus den Einzelanalysenwerten in Spalte 3 von Tabelle 1 erkennt man, daß die meisten PAK-Schadstoffe bis unter die Nachweisgrenze eliminiert waren. In Spalte 4 ist die Eliminationsrate für die einzelnen PAK-Komponenten angegeben.

### Beispiel 2

Als weitere Anwendung wurde ein PAK-kontaminierter Baggerschlamm mit einem Feststoffgehalt von 10 % bis 15 % und einer mittleren Korngröße < 0,5 mm nach dem erfindungsgemäßen Verfahren behandelt. Die Reaktion wurde wieder bei 190°C, bei einem Druck von 20 bar, bei einer Verweilzeit von 3 Stunden bei pH = 2 durchgeführt. Als Katalysatoren wurden Eisen und Chinone zugegeben. Die Ergebnisse sind in Tabelle 2 dargestellt. Spalte 1 zeigt wieder die PAK-Komponenten, Spalte 2 ihre Eingangskonzentration und Spalte 3 die Ausgangskonzentration nach der Oxidation. Von der gesamten, 1213,7 mg/kg Feststoff entsprechenden PAK-Kontamination wurden mehr als 99,7 % oxidiert. Die meisten PAK-Komponenten wurden bis unter die Nachweisgrenze reduziert. Auch andere Kohlenwasserstoffe, z.B. Mineralöle, ließen sich zu mehr als 99 % abbauen.

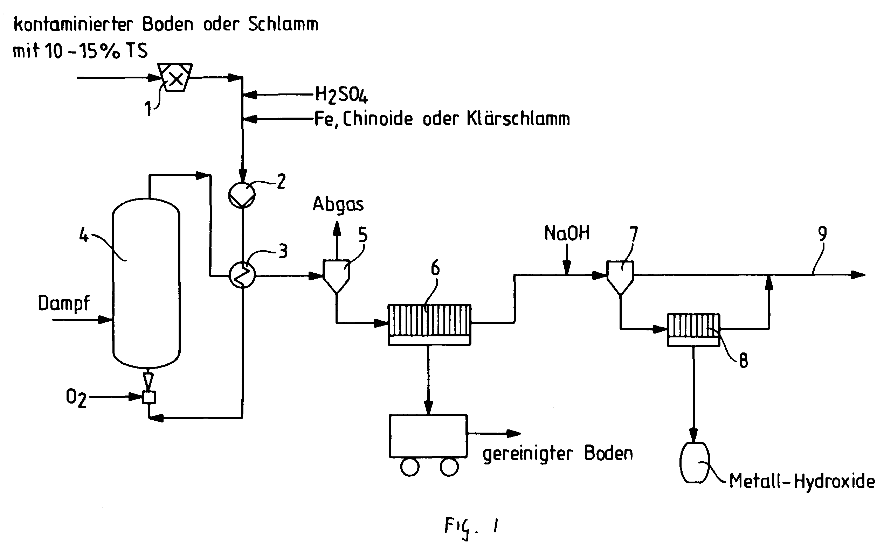

## Patentansprüche

1. Verfahren zur Reinigung von kontaminiertem Schlamm oder aufgeschlämmter Erde, bei dem der Schlamm und die aufgeschlämmte Erde in einer Konzentration von 3 bis 25 % Trockensubstanz (vorzugsweise von 10 bis 15 % Trockensubstanz) bei einer Temperatur von 120°C bis 220°C, bei einem Druck von 3 bar bis 50 bar und bei einem pH Wert < 7 durch Zugabe von reinem Sauerstoff oder eines sauerstoffhaltigen Gases naß oxidiert wird, und wobei dem Schlamm oder der aufgeschlämmten Erde zur Beschleunigung der Oxidationsreaktion Eisenionen alleine oder Eisenionen in Kombination mit Chinonen oder chinonbildenden Substanzen zugesetzt werden.

2. Verfahren nach Anspruch 1, dadurch gekennzeichnet, daß dem Schlamm oder der aufgeschlämmten Erde Eisenionen und Überschußschlamm oder Faulschlamm aus einer biologischen Kläranlage als (Co)-Katalysator zugesetzt wird.

3. Verfahren nach Ansprüchen 1 bis 2, dadurch gekennzeichnet, daß die aufgeschlämmte Erde oder der Schlamm durch mechanische Zerkleinerung auf Korngrößen < 500 µm, vorzugsweise < 100 µm, gebracht wird.

4. Verfahren nach Ansprüchen 1 bis 3, dadurch gekennzeichnet, daß die bei einer sauren Oxidation in Lösung gegangenen Schwermetalle nach Abtrennung der oxidativ gereinigten Feststoffe durch Alkali-Zugabe als Hydroxide ausgefällt und abfiltriert werden.

## Claims

1. Process for cleaning up contaminated sludge or slurried soil in which the sludge and the slurried soil are oxidized at a concentration of 3 to 25% dry matter (preferably 10 to 15% dry matter) at a temperature of 120°C to 220°C, at a pressure of 3 bar to 50 bar and a pH < 7 by adding pure oxygen or an oxygen-containing gas; and in which, to accelerate the oxidation reaction, iron ions alone or iron ions in combination with quinones or quinone-forming substances are added to the sludge or the slurried soil.

2. Process according to Claim 1, characterized in that iron ions and surplus sludge or rotted sludge from a biological sewage treatment plant are added as (co)catalyst to the sludge or slurried soil.

3. Process according to Claims 1 to 2, characterized in that the slurried soil or the sludge is brought by mechanical comminution to particle sizes < 500 µm, preferably < 100 µm.

4. Process according to Claims 1 to 3, characterized in that the heavy metals which have passed into solution during an acidic oxidation are, after separating off the solids cleaned up by oxidation, precipitated as hydroxides by addition of alkali and filtered off.

## Revendications

1. Procédé d'épuration d'une boue ou d'une terre mise en suspension contaminées, selon lequel on oxyde par voie humide la boue ou la terre mise en suspension à une concentration de 3 à 25 % de substance sèche (de préférence de 10 à 15 % de substance sèche), à une température de 120°C à 220°C, sous une pression de 3 à 50 bars, et à un pH inférieur à 7, par addition d'oxygène pur ou d'un gaz oxygéné; et selon lequel on ajoute à la boue ou à la terre en suspension, pour accélérer la réaction d'oxydation, des ions de fer seuls ou des ions de fer en combinaison avec des quinones ou des substances formant des quinones.

2. Procédé selon la revendication 1, caractérisé en ce que l'on ajoute à la boue ou à la terre en suspension des ions de fer et une boue résiduelle ou une boue putréfiée d'une station d'épuration biologique comme (co)catalyseur.

3. Procédé selon les revendications 1 et 2, caractérisé en ce que l'on amène par broyage mécanique la terre mise en suspension ou la boue à une taille de grains inférieure à 500 µm, de préférence inférieure à 100 µm.

4. Procédé selon les revendications 1 à 3, caractérisé en ce que, après la séparation des produits solides obtenus par l'épuration par oxydation, on précipite sous forme d'hydroxydes les métaux lourds passés en solution lors d'une oxydation en milieu acide en ajoutant un alcali, et on les filtre.
